# EUROPÄISCHE PATENTSCHRIFT

(11) **EP 2 675 677 B1**
(45) Veröffentlichungstag und Bekanntmachung des Hinweises auf die Patenterteilung: **29.06.2016**
(21) Anmeldenummer: 11740577.9
(22) Anmeldetag: 02.08.2011
(51) Int. Cl.: B60W 10/08, B60W 50/08, B60W 30/18

(54) **VERFAHREN ZUR STEUERUNG DES REKUPERATIONSVERHALTENS IN EINEM KRAFTFAHRZEUG UND KRAFTFAHRZEUG**
METHOD FOR CONTROLLING THE RECUPERATION BEHAVIOUR IN A MOTOR VEHICLE AND MOTOR VEHICLE
PROCÉDÉ DE GESTION DU COMPORTEMENT DE RÉCUPÉRATION DANS UN VÉHICULE AUTOMOBILE, ET VÉHICULE AUTOMOBILE

(30) Priorität: 16.02.2011 DE 102011011345
(43) Veröffentlichungstag der Anmeldung: 25.12.2013
(73) Patentinhaber: Audi AG, 85045 Ingolstadt (DE)
(72) Erfinder: LIMBACHER, Reimund, 85055 Ingolstadt (DE); KRUSE, Alexander, 85051 Ingolstadt (DE); URBAN, Thomas, 86558 Hohenwart (DE); DIETRICH, Manfred, 85092 Kösching (DE); MUIGG, Andreas, 85055 Ingolstadt (DE)
(74) Vertreter: Wohnert, Dietmar
(86) Internationale Anmeldenummer: PCT/EP2011/003862
(87) Internationale Veröffentlichungsnummer: WO 2012/110062

(56) Entgegenhaltungen:
- WO-A1-03/066398
- DE-A1- 4 437 322
- DE-A1- 19 843 395
- DE-A1-102007 035 424
- DE-A1-102007 039 107

## Beschreibung

Die Erfindung betrifft ein Verfahren zur Steuerung des Rekuperationsverhaltens in einem Kraftfahrzeugs mit einem Hybridantrieb oder einem Elektroantrieb, wobei ein Grundwert eines zur Rekuperation zu nutzenden Rekuperationsmomentes mittels wenigstens eines ersten Bedienelements einstellbar ist.

Kraftfahrzeuge mit Hybridantrieben, die auch eine Elektromaschine umfassen, oder gar reine Elektrokraftfahrzeuge, sind bekannt. Üblicherweise umfassen Kraftfahrzeuge mit einem Hybridantrieb einen Verbrennungsmotor und eine Elektromaschine, wobei der Verbrennungsmotor mit einem Kraftstoff betrieben wird und dem Elektromotor üblicherweise eine Batterie zugeordnet ist.

Bei Kraftfahrzeugen mit einem Hybridantrieb sowie bei Kraftfahrzeugen mit einem Elektroantrieb besteht die Möglichkeit, einen hohen Anteil von Bremsenergie zurückzugewinnen. Dieser Vorgang der Rückgewinnung von Energie wird üblicherweise als Rekuperation bezeichnet. Dabei wird die Elektromaschine mit einem bestimmten Rekuperationsmoment generatorisch betrieben, um die Batterie zu laden.

Die Rückgewinnung von Energie, also die Rekuperation, ist dabei zum einen beim aktiven Bremsen, zum anderen im Schubbetrieb möglich. Dabei ist der Schubbetrieb (im Gegensatz zum Zugbetrieb) der Zustand des Kraftfahrzeugs, bei dem der Verbrennungsmotor das Kraftfahrzeug nicht aktiv antreibt, der Fahrer also das Gaspedal nicht betätigt. Dann wird das Kraftfahrzeug folglich lediglich noch durch seine träge Masse vorwärts getrieben, bis diverse Fahrwiderstände es allmählich zum Stillstand verzögern. Zu diesen Fahrwiderständen zählt auch das Rekuperationsmoment, welches letztlich also einen Bremsbeitrag im Schubbetrieb darstellt. Werden möglichst viele Fahrwiderstände beseitigt, beispielsweise also eine Motorbremse durch den Verbrennungsmotor vermieden und keine Rekuperation durchgeführt, so nennt man diesen Fahrzustand im Übrigen auch Segelbetrieb.

Fahrer haben üblicherweise unterschiedliche Vorlieben bezüglich der Höhe des Rekuperationsmoments. Daher wurden Möglichkeiten vorgeschlagen, die Höhe des Rekuperationsmoments durch einen Fahrer einstellbar zu gestalten. Ein derartiges Verfahren ist beispielsweise aus der DE 10 2007 035 424 A1 bekannt. Darin geht es um eine Bedienschnittstelle, die es dem Fahrer so häufig und bequem wie möglich erlauben soll, den Fahrzustand des Segelns einzunehmen. Dabei wird auch beschrieben, dass die Stärke der Rekuperation an einem Schalter bzw. Stellelement wählbar ist. Vorgeschlagen wird auch, eine kontinuierlich wählbare Vorgabe des Rekuperationsmoments vorzusehen. Mit anderen Worten wird die Schub-Rekuperationsstärke auf einen Grundwert fest eingestellt.

Diese Vorgehensweise ist dahingehend nachteilhaft, dass Fahrer häufig eine situative Einstellung der Rekuperationsstärke wünschen. Bei engen Kurven oder stärker verzögertem Vorderfahrzeug wird oft auf das maximale Rekuperationsmoment gestellt. Bleibt die Einstellung danach erhalten, kommt es andererseits wiederum zu Fahrsituationen, in denen der Fahrer durch die unerwartet hohe Verzögerung in der Schubphase negativ überrascht wird. Eine Anpassung der Rekuperation ist daher oft nur situativ gewünscht.

DE 44 37 322 A1 offenbart eine Motorbremse bei einem fahrergesteuerten Fahrzeug mit Elektromotor, bei dem die Motorbremse eine vom Fahrer einstellbare und/oder programmierbare Bremswirkung hat. Die definierte Bremswirkung kann durch zwei Möglichkeiten fahrerseitig geändert werden, wobei zum einen die definierte Bremswirkung mit einem Stellglied vom Fahrer eingestellt werden kann, beispielsweise mit einem Potentiometer in der Nähe des Lenkrads, und zum anderen die Bremswirkung durch Übernahme einer vom Fahrer vorgegebenen Bremswirkung vorprogrammiert werden kann, insbesondere über die Fußbremse. Wird das Bremspedal als Einstellmöglichkeit verwendet, kann die Programmierung der Elektromotorbremse durch Betätigen des Gaspedals gelöscht werden.

Der Erfindung liegt daher die Aufgabe zugrunde, eine bedienerseitige Einstellung des Rekuperationsmoments auf intuitivere und einfachere Art zu erlauben.

Zur Lösung dieser Aufgabe ist bei einem Verfahren der eingangs genannten Art erfindungsgemäß vorgesehen, dass ein zweites Bedienelement zur Einstellung eines von dem Grundwert abweichenden Zwischenwerts für das Rekuperationsmoment verwendet wird, wobei nach Einstellung eines Zwischenwerts durch einen Bediener temporär, insbesondere wenigstens für die nächste Schubphase, der Zwischenwert als Rekuperationsmoment verwendet wird, woraufhin bei Eintritt einer Rückstellbedingung wieder auf den Grundwert zurückgeschaltet wird.

Die Erfindung schlägt also vor, die grundlegende Einstellung der Rekuperation, also die Einstellung auf einen Grundwert, durch eine situative, nur temporär wirkende Korrekturmöglichkeit zu ergänzen, die idealerweise über ein schnell zu erreichendes zweites Bedienelement ermöglicht wird. Es ist also eine momentane, situationsabhängige Anpassung der Rekuperation möglich, die einerseits für den Fahrer sofort erlebbar ist, zum anderen aber aufgrund der Rückstellbedingungen nur für die Situation gilt, für die sie gewählt wurde, ohne später, wenn sie längst vergessen wurde, für überraschende, ungewollte Momente zu sorgen. Es handelt sich also um eine Art temporärer Feinkorrektur, die nach Beenden der Situation - insbesondere nach Beenden der nächsten Schubphase - wieder beendet wird, mithin rein situativ angewendet wird. Es wird dem Fahrer auf diese Weite beispielsweise ermöglicht, beim Anfahren auf eine engere Kurve ein größeres Rekuperationsmoment, mithin eine größere Bremswirkung, einzustellen, welche aber nach der engen Kurve für die nächste gegebenenfalls auftretende Schubphase keine Gültigkeit mehr hat, so dass dann neu vom Grundwert ausgehend bei Bedarf eine Korrektur vorgenommen werden kann. Ähnlich verhält es sich beispielsweise, wenn von hinten auf ein Kraftfahrzeug aufgefahren wird, und dabei mehr oder weniger Bremswirkung durch das Rekuperationsmoment gefordert wird. Auch die Einstellung eines Segelbetriebs für einen temporären Zeitraum wird problemlos ermöglicht. Dem Fahrer, der Situationen gut einschätzen und beurteilen kann, ob er für eine bestimmte Situation ein geringeres oder höheres Rekuperationsmoment braucht, wird also ein Mittel an die Hand gegeben, dieses exakt für die gewünschte Situation (und nicht länger) einzustellen.

In weiterer Ausgestaltung der vorliegenden Erfindung kann vorgesehen sein, dass als eine Rückstellbedingung das Ende einer Schubphase und/oder das Nichteintreten einer weiteren Schubphase in einer vorbestimmten Latenzzeit nach dem Ende einer Schubphase verwendet wird. Es kann also vorgesehen sein, dass das Ende der nächsten Schubphase bzw. der aktuellen Schubphase unmittelbar auch die Änderung des Rekuperationsmoments auf den Zwischenwert aufhebt und der Grundwert wieder hergestellt wird. Bevorzugt wird jedoch, die Beendigung der Situation an das Nichteintreten einer weiteren Schubphase in einer vorbestimmten Latenzzeit nach dem Ende einer Schubphase zu knüpfen, so dass auch eine kurzzeitige Unterbrechung der Schubphase, beispielsweise durch aktives Bremsen und/oder ein kurzfristiges Gas geben, noch nicht als Anzeichen für die Beendigung der Situation angesehen wird, für die der Zwischenwert vom Fahrer eingestellt wurde. Eine derartige Latenzzeit kann beispielsweise fünf bis zehn Sekunden, bevorzugt sechs Sekunden, lang sein.

In einer besonders vorteilhaften Ausgestaltung der vorliegenden Erfindung kann vorgesehen sein, dass eine Einstellung eines Zwischenwerts nur bei Vorliegen einer Einstellungsbedingung ermöglicht wird und/oder die Einstellung auf den Zwischenwert nur für eine vorbestimmte Einstellungszeit oder wenigstens die Dauer der innerhalb der Einstellungszeit begonnenen nächsten Schubphase oder bereits aktuellen Schubphase beibehalten wird. Mit den hier beschriebenen beiden Möglichkeiten soll erreicht werden, dass nicht eine versehentliche oder nicht erlebbare Verstellung des Rekuperationsmoments auf den Zwischenwert auftreten kann, beispielsweise, wenn sich in absehbarer Zeit gar keine Schubphase anschließt.

Mithin kann in einer ersten alternativen Ausgestaltung vorgesehen sein, dass eine Einstellungsbedingung vorliegen muss, um überhaupt eine Einstellung des Zwischenwerts zu ermöglichen. Dabei kann als Einstellungsbedingung das aktuelle Vorliegen einer Schubphase und/oder das Bevorstehen einer Schubphase in einer vorbestimmten Vorausbestimmungszeit verwendet werden. Vorteilhaft ist es, wenn das baldige Bevorstehen einer Schubphase bereits prädiziert werden kann, mithin mit einer bestimmten Sicherheit vorausgesagt werden kann, dass eine Schubphase folgt. Hierzu kann beispielsweise vorgesehen sein, dass das Bevorstehen einer Schubphase in Abhängigkeit von prädiktiven Streckendaten und/oder Daten über ein vorausfahrendes Kraftfahrzeug und/oder Daten über eine Geschwindigkeitsbegrenzung erfolgt. Steht beispielsweise eine Kurve bevor, was aus prädiktiven Streckendaten ermittelt werden kann, so ist davon auszugehen, dass eine Schubphase auftreten kann. Analog kann das Verhalten eines vorausfahrenden Kraftfahrzeugs beobachtet werden, wobei, wenn dieses langsamer fährt oder bremst, eine baldige Schubphase möglich ist. Schließlich können auch Geschwindigkeitsbegrenzungen überwacht werden, entweder auf Basis der durch Kartendaten ergänzten prädiktiven Streckendaten oder durch eine Verkehrszeichenerkennung. Denn gerade dann, wenn sich die Geschwindigkeitsbegrenzungen ändern, wird häufig das Bremsmoment einer Schubphase genutzt, um sich der neuen Geschwindigkeit anzupassen. Dann kann immer bereits kurz vor einer möglichen Schubphase das zweite Bedienelement letztlich "freigeschaltet" werden.

In dieser Ausgestaltung, in der eine Einstellung des Zwischenwerts über weite Strecken hinaus nicht möglich ist, kann das erfindungsgemäße Verfahren besonders vorteilhaft weitergebildet werden, indem bei Nichtvorliegen der Einstellungsbedingung die Betätigung des zweiten Bedienelements blockiert wird, insbesondere das zweite Bedienelement arretiert wird. Auf diese Weise wird dem Fahrer auch haptisch zu erkennen gegeben, dass zur Zeit eine Änderung des Rekuperationsmoments nicht möglich/nicht anzuraten wäre. Auf diese Weise "lernt" der Fahrer zusätzlich auch die Funktion und den Anwendungsbereich des zweiten Bedienelements leichter und intuitiver. Beispielsweise kann bei einem als Hebel ausgebildeten zweiten Bedienelement dessen Betätigung gesperrt werden oder dergleichen.

Wie bereits beschrieben, ist es alternativ oder zusätzlich auch denkbar, dass die Einstellung auf den Zwischenwert nur für eine vorbestimmte Einstellungszeit oder wenigstens die Dauer der innerhalb der Einstellungszeit begonnenen nächsten Schubphase oder bereits aktuellen Schubphase beibehalten wird. Mit Betätigung des zweiten Bedienelements wird dann also zunächst überprüft, ob bereits eine aktuelle Schubphase vorliegt. Ist dies der Fall, wird die Einstellung bis zum Eintritt der Rückstellbedingung beibehalten. Liegt aktuell keine Schubphase vor, beginnt die Einstellungszeit zu laufen. Läuft diese ab, bevor eine Schubphase begonnen wird, wird die Korrektur des Rekuperationsmoments verworfen. Beginnt allerdings eine Schubphase innerhalb der Einstellungszeit, so wird das auf den Zwischenwert eingestellte Rekuperationsmoment verwendet, bis die Rückstellbedingung eintritt. Die Einstellungszeit kann beispielsweise drei bis sechs Sekunden betragen. Es sei an dieser Stelle nochmals darauf hingewiesen, dass beide Möglichkeiten auch vorteilhaft miteinander kombiniert werden können. So kann beispielsweise auch dann, wenn bei einer möglichen Schubphase das zweite Bedienelement zur Verstellung des Rekuperationsmoments auf den Zwischenwert freigegeben wird, eine Einstellungszeit zu laufen beginnen, da es ja vorkommen kann, dass gar keine Schubphase durch die Fahrerbedienung ausgelöst wird. Es ist im Übrigen auch denkbar, die Latenzzeit, falls vorgesehen, und die Einstellungszeit gleich zu wählen und somit letztlich zusammenzufassen.

Wie bereits erwähnt, kann in weiterer vorteilhafter Ausgestaltung der vorliegenden Erfindung vorgesehen sein, dass ein in einer während der Fahrt durch den Fahrer ergonomisch erreichbaren Position angeordnetes zweites Bedienelement verwendet wird, insbesondere ein im Bereich des Lenkrads und/oder eines Schalthebels angeordnetes Bedienelement und/oder ein Fußpedal. Nachdem es um eine situative Korrektur des Rekuperationsmoments geht, sollte das zweite Bedienelement für den Fahrer während der Fahrt möglichst ohne großes Umgreifen ergonomisch und schnell erreichbar sein, so dass er auf eine bestimmte Fahrsituation, in der er ein geändertes Rekuperationsmoment wünscht, schnell reagieren kann.

Dabei hat es sich als besonders vorteilhaft erwiesen, wenn als zweites Bedienelement ein Schalter und/oder Schalthebel am Lenkrad und/oder am Lenkstock verwendet wird, insbesondere eine Schaltwippe. Besonders bevorzugt sind dabei Schaltwippen, häufig auch als "Paddels" bezeichnet, die im Bereich der Querstrebe des Lenkrads angeordnet werden können, wo sie für die das Lenkrad hintergreifenden Finger eines Fahrers gut erreichbar sind. Dabei können die Schaltwippen so angeordnet sein, dass sie mit dem Lenkrad rotieren oder aber auch ortsfest am Lenkstock angeordnet werden. Beispielsweise kann vorgesehen sein, eine linke und eine rechte Schaltwippe als zweite Bedienelemente vorzusehen, wobei jeweils einer Schaltwippe eine Erhöhung oder eine Erniedrigung des Rekuperationsmoments ausgehend vom Grundwert zugeordnet ist.

Derartige Schaltwippen sind im Übrigen von Kraftfahrzeugen bekannt, die diese Schaltwippen zum Schalten verschiedener Gänge einsetzen (Tiptronic). Hieraus kann für Elektroantriebe letztlich eine für Fahrer intuitive, analoge Positionierung und Verwendung erfolgen. Es kann also vorgesehen sein, dass bei einem Elektroantrieb ein in einem schaltbaren Kraftfahrzeug als Gangwahlbedienelement verwendetes Bedienelement als zweites Bedienelement verwendet wird. Dabei liegt eine deutliche Analogie vor, denn auch eine Tiptronic-Schaltung wird häufig eingesetzt, um durch Herunterschalten eine Motorbremse zu erzeugen. Mithin wird vorgeschlagen, bei einem Elektroantrieb den Betriebewahlschalter durch das zweite Bedienelement zu ersetzen, so dass der Fahrer intuitiv ähnliche Bedienmöglichkeiten an einer ähnlichen Position vorfindet.

Es sei an dieser Stelle noch angemerkt, dass es bei Kraftfahrzeugen mit Hybridantrieb, beispielsweise bei Plug-In-Hybriden, auch denkbar ist, dass über ein weiteres Bedienelement durch den Fahrer seinem Typ entsprechend gewählt werden kann, ob er ein bestimmtes Bedienelement, beispielsweise zwei wie beschrieben angeordnete Schaltwippen, als zweites Bedienelement im Sinne der vorliegenden Erfindung oder als Gangwahlbedienelement nutzen möchte.

Grundsätzlich kann vorgesehen sein, dass das Rekuperationsmoment letztlich kontinuierlich frei wählbar ist, beispielsweise innerhalb eines vorgegebenen Bereichs. Eine Zeitdauer der Betätigung des zweiten Bedienelements oder dergleichen kann dann genutzt werden, um zu bestimmen, wie weit das Rekuperationsmoment abgesenkt werden soll, das bedeutet, wie weit der Zwischenwert vom Grundwert abweicht. Bevorzugt wird es im Rahmen der vorliegenden Erfindung jedoch, wenn das Rekuperationsmoment auf wenigstens zwei unterschiedliche, vorgegebene Werte einstellbar ist, insbesondere wenigstens vier unterschiedliche Werte umfassend einen Wert von Null für einen Segelbetrieb. In diesem Fall ist das Rekuperationsmoment letztlich also gestuft auf bestimmte, vorgegebene Werte einstellbar, beispielsweise im Fall von vier Einstellmöglichkeiten einen Wert von Null für einen Segelbetrieb, ein geringeres, ein mittleres und ein starkes Rekuperationsmoment.

In vorteilhafter Weiterbildung der Erfindung kann vorgesehen sein, dass bei einer stufenweisen Einstellbarkeit des Rekuperationsmoments nur ein um eine Stufe vom Grundwert abweichender Zwischenwert eingestellt werden kann. In diesem Fall sind also nur definierte Abweichungen vom Grundwert zulässig, beispielsweise um eine einstellbare Stufe. Ist, falls hier Stufen vorgesehen sind, als Grundwert beispielsweise ein mittleres Rekuperationsmoment vorgegeben, so kann durch Betätigung des zweiten Bedienelements entweder abweichend ein kleines Rekuperationsmoment oder ein hohes Rekuperationsmoment als Zwischenwert eingestellt werden, nicht jedoch das Rekuperationsmoment von Null. Auf diese Weise werden zu starke Abweichungen und somit Unterschiede im Fahrempfinden vermieden.

Ferner kann vorgesehen sein, dass die Einstellung des Grundwertes mit der Einstellung eines Betriebsmodus des Kraftfahrzeugs erfolgt, insbesondere eines sportlichen Modus und/oder eines Komfort-Modus und/oder eines Normalmodus und/oder eines energiesparenden Modus, und/oder der Benutzer den Grundwert frei wählt, insbesondere über ein an einer Mensch-Maschine-Schnittstelle dargestelltes Menü. Der Grundwert kann also über die Kopplung an einen Betriebsmodus erfolgen. Im oben dargestellten Beispiel von vier Stufen des Rekuperationsmoments kann beispielsweise eine Zuordnung derart erfolgen, dass in einem energiesparenden Betriebsmodus ein Rekuperationsmoment von Null mit vorgesehen ist (Segeln), in einem Komfort-Modus eine schwache Rekuperation vorgesehen ist, in einem Normalmodus eine mittlere Rekuperation und einem sportlichen Betriebsmodus ein hoher Rekuperationsmomentenwert. In diesem Fall wird der Grundwert des Rekuperationsmoments also in ein beispielsweise einem bestimmten Fahrstil zugeordnetes Betriebsparameterpaket eingegliedert. Alternativ ist es selbstverständlich auch denkbar, den Grundwert - insbesondere im erlaubten Rahmen - frei wählbar zu gestalten, beispielsweise über ein Einstellmenü in einer Mensch-Maschine-Schnittstelle.

Zweckmäßig ist es ferner, wenn die aktuelle Einstellung des Grundwerts und/oder des Zwischenwerts einem Fahrer zur Anzeige gebracht wird. Hierzu kann beispielsweise eine entsprechende Anzeige in der Instrumententafel oder einem Multifunktionsdisplay vorgesehen werden, indem der Grundwert in einer bestimmten Farbe, beispielsweise auf einer Skala, angezeigt wird und eine Abweichung in einer anderen Farbe, gegebenenfalls in Rot, so dass Grundwert und Zwischenwert in einer einzigen Darstellung ablesbar sind. Selbstverständlich sind auch andere Möglichkeiten zur Darstellung denkbar. So erhält der Fahrer zusätzlich zur Erlebbarkeit der situativen Einstellbarkeit eine Information über die aktuellen Einstellungen.

Neben dem Verfahren betrifft die Erfindung auch ein Kraftfahrzeug mit einem Hybridantrieb oder einem Elektroantrieb, umfassend eine Antriebssteuereinrichtung sowie ein erstes Bedienelement zur Einstellung des Grundwerts eines zur Rekuperation zu nutzenden Rekuperationsmomentes und ein zweites Bedienelement zur Einstellung eines Zwischenwertes für ein Rekuperationsmoment, welches zur Ausführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mittels welchem folglich auch die mit der Erfindung erreichten Vorteile realisiert werden können.

Ein derartiges Kraftfahrzeug umfasst also eine Elektromaschine, die in einer Schubphase mit einem definierten Rekuperationsmoment generatorisch betrieben werden kann; dabei erfolgt eine Ansteuerung über die Antriebssteuereinrichtung. Grundsätzlich wird für die Höhe des Rekuperationsmoments ein Grundwert herangezogen, wobei jedoch bei Betätigung des zweiten Bedienelements ein Zwischenwert eingestellt werden kann, der temporär statt des Grundwertes verwendet wird. Dabei ist es im Übrigen besonders vorteilhaft, wenn das zweite Bedienelement als wenigstens eine am Lenkrad vorgesehene Schaltwippe ausgebildet ist.

Weitere Vorteile und Einzelheiten der vorliegenden Erfindung ergeben sich aus den im folgenden beschriebenen Ausführungsbeispielen sowie anhand der Zeichnung. Dabei zeigen:
- Fig. 1: ein erfindungsgemäßes Kraftfahrzeug,
- Fig. 2: ein Lenkrad mit zweiten Bedienelementen,
- Fig. 3: eine Skizze zur Wirkung des zweiten Bedienelements,
- Fig. 4: eine Skizze zum erfindungsgemäßen Verfahren,
- Fig. 5: eine Rekuperationsanzeige in einem ersten Zustand, und
- Fig. 6: eine Rekuperationsanzeige in einem zweiten Zustand.

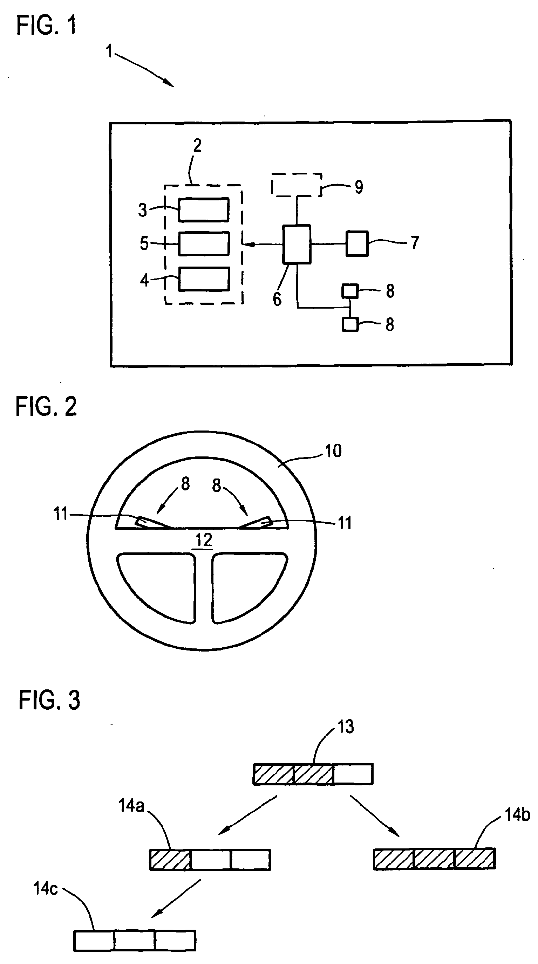

Fig. 1 zeigt eine Prinzipskizze eines erfindungsgemäßen Kraftfahrzeugs 1, welches einen schematisch bei 2 gezeigten Hybridantrieb aufweist. Mithin ist neben einem Verbrennungsmotor 3 auch eine Elektromaschine 4 vorgesehen, die sowohl als Generator als auch als Motor betrieben werden kann.

Während einer Schubphase, das bedeutet, wenn weder aktiv gebremst wird noch das Gaspedal durch den Fahrer betätigt wird, ist es nun möglich, ein gewisses Rekuperationsmoment zu nutzen, um die Elektromaschine 4 im generatorischen Betrieb zu betreiben und eine der Elektromaschine 4 zugeordnete Batterie 5 zu laden.

Der Betrieb des Hybridantriebs 2 wird durch eine Antriebssteuereinrichtung 6 gesteuert, welche auch das aktuell zu nutzende Rekuperationsmoment bestimmt.

Die Antriebssteuereinrichtung 6 steht über einen Fahrzeugbus, beispielsweise einen CAN-Bus, mit einer Mensch-Maschine-Schnittstelle 7 als erstes Bedienelement und zwei zweiten Bedienelementen 8 genauso in Verbindung wie mit weiteren, hier nur angedeuteten Fahrzeugsystemen 9.

Über die Mensch-Maschine-Schnittstelle 7 kann, beispielsweise über ein geeignetes Menü, durch den Fahrer ein Betriebsmodus gewählt werden, beispielsweise ein energiesparender Modus, ein normaler Modus, ein sportlicher Modus und ein Komfort-Modus. Jedem dieser Betriebsmodi ist neben anderen Betriebsparametereinstellungen, die das Fahrverhalten des Kraftfahrzeug 1 betreffen, ein Grundwert für das Rekuperationsmoment zugeordnet. Beispielsweise kann einem energiesparenden Modus ein Rekuperationsmoment von Null zugeordnet werden, da hier ein Segelbetrieb angedacht ist, einem Komfort-Modus ein eher niedriges Rekuperationsmoment, einem normalen Modus ein mittleres Rekuperationsmoment und einem sportlichen Modus ein hohes Rekuperationsmoment. In dieser Ausführungsform ist das Rekuperationsmoment also in vier Stufen schaltbar, die auch im erfindungsgemäßen Verfahren verwendet werden.

Die Mensch-Maschine-Schnittstelle 7 wirkt also als ein erstes Bedienelement, mit dem ein beizubehaltender Grundwert für das Rekuperationsmoment eingestellt werden kann. Dabei kann auch eine unmittelbare, frei wählbare Einstellung des Grundwertes für das Rekuperationsmoment über ein entsprechendes Einstellmenü realisiert sein. Mit diesem Grundwert für das Rekuperationsmoment wird üblicherweise in einer Schubphase die Elektromaschine 4 im Generatorbetrieb angesteuert.

Um auch eine situative Einstellung für eine bestimmte Fahrsituation zu ermöglichen, ist neben der als erstes Bedienelement wirkenden Mensch-Maschine-Schnittstelle 7 eine Anordnung von zwei zweiten Bedienelementen 8 vorgesehen, die für den Fahrer während der Fahrt besonders ergonomisch und leicht zu erreichen sind, um in einer speziellen Fahrsituation spontan eine Anpassung des Rekuperationsmoments vornehmen zu können. Im vorliegenden Ausführungsbeispiel ist, vgl. Fig. 2, im Kraftfahrzeug 1 ein Lenkrad 10 vorgesehen, an dem die beiden zweiten Bedienelemente 8 als Schaltwippen 11 an einer Querstrebe 12 des Lenkrads 10 realisiert sind, so dass sie von den das Lenkrad 10 umgreifenden Fingern des Fahrers leicht erreicht und betätigt werden können. Die elastisch gegengelagerten Schaltwippen 11 können dabei beispielsweise als kurze Schalthebel oder dergleichen bewegt werden, die durch Antippen ein Betätigungssignal erzeugen. Es sei an dieser Stelle angemerkt, dass selbstverständlich auch andere Bedienelemente als zweite Bedienelemente vorgesehen werden können, die durch einen Fahrer gut erreichbar sind, beispielsweise auch Schalter oder Schaltstöcke am Lenkrad, ein Fußpedal und/oder Bedienelemente im Bereich eines Gangwahlhebels.

Konkret ist im vorliegenden Fall nun vorgesehen, dass bei Betätigung der linken Schaltwippe 11 ein von dem Grundwert abweichender Zwischenwert erzeugt werden kann, der gegenüber dem Grundwert erhöht ist, während die rechte Schaltwippe 11 für einen Zwischenwert sorgt, der niedriger als der aktuelle Grundwert ist. Dabei sei an dieser Stelle angemerkt, dass selbstverständlich, falls, wie in diesem Fall, eine bestimmte Anzahl vorgegebener Werte bzw. Stufen vorliegen, auf der höchsten Stufe selbstverständlich keine Erhöhung mehr möglich ist sowie das Rekuperationsmoment auch selbstverständlich auch nicht unter Null sinken kann.

Nachdem es gerade bei einer Verstellung des Rekuperationsmoments relevant ist, dass der Effekt der Betätigung auch unmittelbar erlebt werden kann, nachdem er sich ja auf eine aktuelle bzw. aktuell bevorstehende Verkehrssituation beziehen soll, sind die Schaltwippen 11 nur bei Vorliegen einer Einstellungsbedingung betätigbar, ansonsten sind sie blockiert und können nicht eingesetzt werden. Als Einstellungsbedingung wird hierbei betrachtet, ob gerade eine Schubphase vorliegt oder ob eine Schubphase möglicherweise bevorsteht. Dazu werden die Daten weiterer Fahrzeugsysteme 9 ausgewertet, wobei unter anderem prädiktive Streckendaten daraufhin ausgewertet werden können, ob bald eine Kurve naht, Sensordaten über vorausfahrende Kraftfahrzeuge genutzt werden können, um bei einem deutlich langsamer fahrenden Vorderfahrzeug auf eine möglicherweise bevorstehende Schubphase zu schließen, und Informationen über bevorstehende Geschwindigkeitsbegrenzungen, beispielsweise anhand einer Verkehrszeichenerkennung oder von Kartendaten eines Navigationssystems, betrachtet werden, um diesbezüglich eine möglicherweise bevorstehende Schubphase vorauszusagen.

Liegt also eine Schubphase vor oder ist eine Schubphase aufgrund der Umgebung des Kraftfahrzeugs wahrscheinlich, sind die Schaltwippen 11 betätigbar. Der Fahrer kann nun einen Zwischenwert festlegen, der temporär für die aktuelle Fahrsituation statt des Grundwertes für das Rekuperationsmoment verwendet werden soll. Dabei sei an dieser Stelle angemerkt, dass, falls im Folgenden doch keine Schubphase auftritt, diese gewählte Einstellung nach einer vorbestimmten Einstellungszeit, die hier sechs Sekunden beträgt und einer später noch zu diskutierenden Latenzzeit entspricht, wieder verfällt.

Liegt bereits aktuell eine Schubphase vor oder tritt innerhalb der Einstellungszeit eine Schubphase auf, so wird nicht der Grundwert für das Rekuperationsmoment angesetzt, sondern die Antriebssteuerungseinrichtung 6 steuert die Elektromaschine 4 anhand des Zwischenwerts an. Dieser Zwischenwert für das Rekuperationsmoment bleibt bis zum Eintritt einer Rückstellbedingung erhalten, wobei vorliegend als Rückstellbedingung das Nichteintreten einer weiteren Schubphase in der bereits erwähnten, vorbestimmten Latenzzeit nach dem Ende einer Schubphase verwendet wird. Das bedeutet, ein Fahrer kann eine Schubphase auch kurzzeitig unterbrechen, ohne dass hieraus bereits gefolgert wird, dass die Fahrsituation, für die er den Zwischenwert gewählt hat, bereits beendet ist, wenn er innerhalb der Latenzzeit eine weitere Schubphase anschließt. Tritt jedoch die Rückstellbedingung ein, ist also insbesondere die Latenzzeit ohne eine weitere Schubphase verstrichen, wird im Folgenden wieder der Grundwert für das Rekuperationsmoment angesetzt. Die Einstellung gemäß dem Zwischenwert, die mittels der Schaltwippen 11 vorgenommen wird, wird also tatsächlich nur für die aktuelle Fahrsituation übernommen.

Im hier vorliegenden Fall kann durch mehrfache Betätigung der Schaltwippen 11 auch ein weiter vom Grundwert entfernter Zwischenwert für das Rekuperationsmoment gewählt werden; es kann jedoch auch vorgesehen werden, dass nur eine Stufe weit vom Grundwert abgewichen werden kann.

Fig. 3 zeigt diese Möglichkeiten an einem Beispiel, in dem als Grundwert 13 ein mittleres Rekuperationsmoment eingestellt ist. Durch entsprechende Betätigung der Schaltwippen 11 können dabei bei einmaliger Betätigung die Zwischenwerte 14a (schwaches Rekuperationsmoment) und 14b (starkes Rekuperationsmoment) erreicht werden. Durch eine weitere Betätigung der rechten Schaltwippe 11 kann auch der Zwischenwert 14c (Rekuperationsmoment Null) erreicht werden.

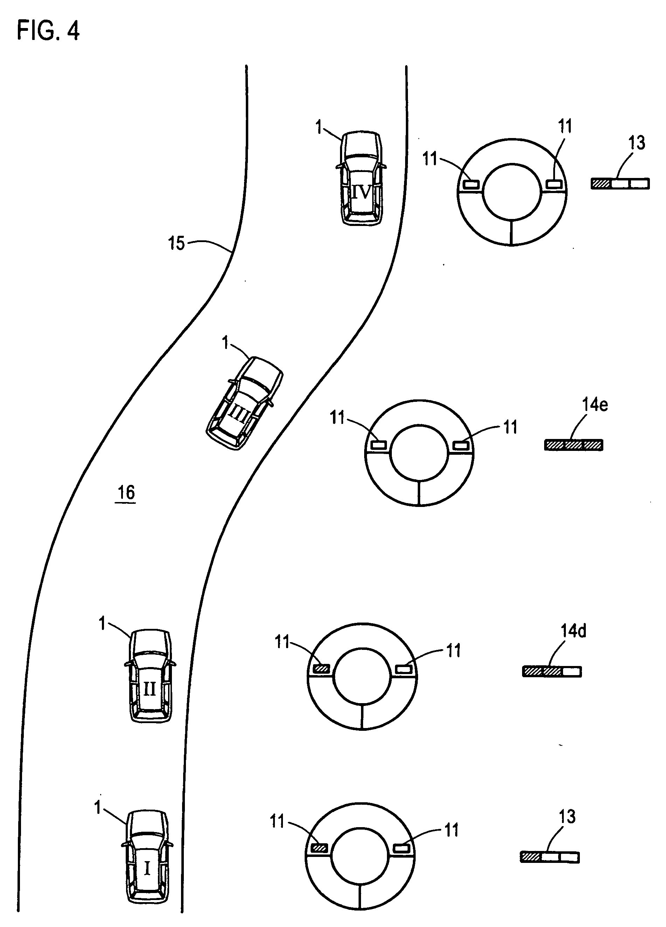

Fig. 4 erläutert nun das erfindungsgemäße Verfahren näher an einer bestimmten Verkehrssituation. Gezeigt ist das Kraftfahrzeug 1 in verschiedenen Positionen I - IV auf einer Straße 15, die eine Kurve 16 aufweist. Diese Kurve 16 ist aus prädiktiven Streckendaten bekannt, so dass in der Position I die Schaltwippen 11 freigeschaltet werden; das aktuelle eingestellte Rekuperationsmoment entspricht dem Grundwert 13, hier einem schwachen Rekuperationsmoment. Betätigt der Fahrer nun die linke Schaltwippe 11, wie in Fig. 4 an der Positon I angedeutet, ergibt sich der Zwischenwert 14d, falls innerhalb der Einstellungszeit tatsächlich eine Schubphase auftritt. Dies geschieht an der Position II, so dass dort nun das Rekuperationsmoment 14d verwendet wird. Stellt der Fahrer fest, dass er das Rekuperationsmoment weiter erhöhen will, so kann er, wie bei der Position II angedeutet, erneut die linke Schaltwippe 11 betätigen, um als weiteren Zwischenwert den Zwischenwert 14e (hohes Rekuperationsmoment) einzustellen, welcher ab dieser Betätigung bereits spürbar verwendet wird, nachdem sich das Kraftfahrzeug 1 ja bereits in einer Schubphase befindet. Dies ist während der Fortdauer der Schubphase in der Position III nochmals dargestellt. In der Position IV hat das Kraftfahrzeug 1 die Kurve durchfahren, und es trat für die Latenzzeit keine weitere Schubphase auf. Das bedeutet, dass das Rekuperationsmoment wieder auf den Grundwert 13 zurückgesetzt wird und die Schaltwippen 11 arretiert werden, so dass sie nicht betätigt werden können.

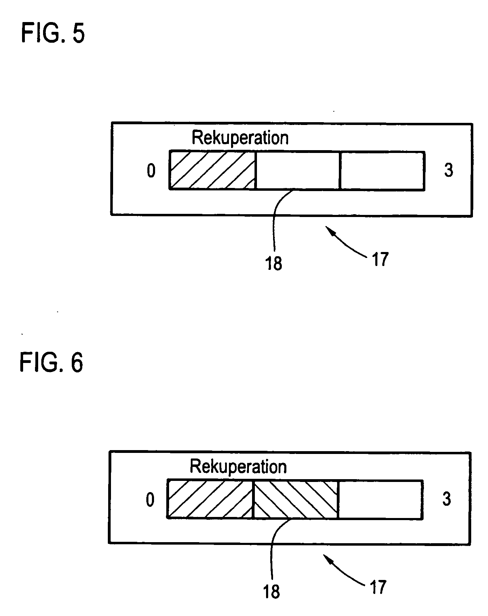

Im vorliegenden Ausführungsbeispiel wird die aktuelle Einstellung bezüglich des Rekuperationsmoments auch dem Fahrer in einem Multifunktionsdisplay oder einer Instrumententafel zur Anzeige gebracht. Eine mögliche Anzeige zeigen die Fig. 5 und 6. Fig. 5 zeigt eine mögliche Anzeige 17 zum Zeitpunkt, in dem das Kraftfahrzeug 1 die Position I inne hat. Ersichtlich wird auf einer Skala 18 der Grundwert 13, beispielsweise durch Hinterleuchtung eines Skalenelements in Blau, zur Anzeige gebracht. Fig. 6 zeigt die Anzeige an der Position II, wo nun auf der Skala 18 der Zwischenwert 14d angezeigt wird. Hierbei verbleibt die Anzeige des Grundwertes in Blau, während die temporäre Änderung, der Zwischenwert, durch eine rote Hinterleuchtung des mittleren Skalensegments dargestellt wird.

Selbstverständlich sind auch andere Ausgestaltungen denkbar, beispielsweise eine solche, in der zwei verschiedene Skalen verwendet werden oder dergleichen.

## Patentansprüche

1. Verfahren zur Steuerung des Rekuperationsverhaltens in einem Kraftfahrzeug (1) mit einem Hybridantrieb (2) oder einem Elektroantrieb, wobei ein Grundwert (13) eines zur Rekuperation zu nutzenden Rekuperationsmomentes mittels wenigstens eines ersten Bedienelements einstellbar ist,
**dadurch gekennzeichnet,**
**dass** ein zweites Bedienelement (8) zur Einstellung eines von dem Grundwert (13) abweichenden Zwischenwerts (14a, 14b, 14c, 14d, 14e) für das Rekuperationsmoment verwendet wird, wobei nach Einstellung eines Zwischenwerts (14a, 14b, 14c, 14d, 14e) durch einen Bediener temporär, insbesondere wenigstens für die nächste Schubphase, der Zwischenwert als Rekuperationsmoment verwendet wird, woraufhin bei Eintritt einer Rückstellbedingung wieder auf den Grundwert (13) zurückgeschaltet wird.

2. Verfahren nach Anspruch 1,
**dadurch gekennzeichnet,**
**dass** als eine Rückstellbedingung das Ende einer Schubphase und/oder das Nichteintreten einer weiteren Schubphase in einer vorbestimmten Latenzzeit nach dem Ende einer Schubphase verwendet wird.

3. Verfahren nach Anspruch 1 oder 2,
**dadurch gekennzeichnet,**
**dass** eine Einstellung eines Zwischenwerts (14a, 14b, 14c, 14d, 14e) nur bei Vorliegen einer Einstellungsbedingung ermöglicht wird und/oder die Einstellung auf den Zwischenwert (14a, 14b, 14c, 14d, 14e) nur für eine vorbestimmte Einstellungszeit oder wenigstens die Dauer der innerhalb der Einstellungszeit begonnenen nächsten Schubphase oder bereits aktuellen Schubphase beibehalten wird.

4. Verfahren nach Anspruch 3,
**dadurch gekennzeichnet,**
**dass** als Einstellungsbedingung das aktuelle Vorliegen einer Schubphase und/oder das Bevorstehen einer Schubphase in einer vorbestimmten Vorausbestimmungszeit verwendet wird.

5. Verfahren nach Anspruch 4,
**dadurch gekennzeichnet,**
**dass** das Bevorstehen einer Schubphase in Abhängigkeit von prädiktiven Streckendaten und/oder Daten über ein vorausfahrendes Kraftfahrzeug und/oder Daten über eine Geschwindigkeitsbegrenzung erfolgt.

6. Verfahren nach einem der Ansprüche 3 bis 5,
**dadurch gekennzeichnet,**
**dass** bei Nichtvorliegen der Einstellungsbedingung die Betätigung des Bedienelements (8) blockiert wird, insbesondere das Bedienelement (8) arretiert wird.

7. Verfahren nach einem der vorangehenden Ansprüche,
**dadurch gekennzeichnet,**
**dass** ein in einer während der Fahrt durch den Fahrer ergonomisch erreichbaren Position angeordnetes zweites Bedienelement (8) verwendet wird, insbesondere ein im Bereich des Lenkrads (10) und/oder eines Schalthebels angeordnetes Bedienelement (8) und/oder ein Fußpedal.

8. Verfahren nach einem der vorangehenden Ansprüche,
**dadurch gekennzeichnet,**
**dass** als zweites Bedienelement (8) ein Schalter und/oder Schalthebel am Lenkrad (10) und/oder am Lenkstock verwendet wird, insbesondere ein Paddel.

9. Verfahren nach einem der vorangehenden Ansprüche,
**dadurch gekennzeichnet,**
**dass** bei einer stufenweisen Einstellbarkeit des Rekuperationsmoments nur ein um eine Stufe vom Grundwert (13) abweichender Zwischenwert (14a, 14b, 14c, 14d, 14e) eingestellt werden kann.

10. Verfahren nach einem der vorangehenden Ansprüche,
**dadurch gekennzeichnet,**
**dass** die Einstellung des Grundwertes (13) mit der Einstellung eines Betriebsmodus des Kraftfahrzeugs (1) erfolgt, insbesondere eines sportlichen Modus und/oder eines Komfort-Modus und/oder eines Normalmodus und/oder eines energiesparenden Modus, und/oder der Benutzer den Grundwert (13) frei wählt, insbesondere über ein an einer Mensch-Maschine-Schnittstelle (7) dargestelltes Menü.

11. Verfahren nach einem der vorangehenden Ansprüche,
**dadurch gekennzeichnet,**
**dass** die aktuelle Einstellung des Grundwerts (13) und/oder des Zwischenwerts (14a, 14b, 14c, 14d, 14e) einem Fahrer zur Anzeige gebracht wird.

12. Kraftfahrzeug (1) mit einem Hybridantrieb (2) oder einem Elektroantrieb, umfassend eine Antriebsteuereinrichtung (6) sowie ein erstes Bedienelement zur Einstellung eines Grundwerts (13) eines zur Rekuperation zu nutzenden Rekuperationsmomentes und ein zweites Bedienelement (8) zur Einstellung eines Zwischenwertes (14a, 14b, 14c, 14d, 14e) für ein Rekuperationsmoment, ausgebildet zur Durchführung eines Verfahrens nach einem der vorangehenden Ansprüche.

## Claims

1. A method for controlling the recuperation behaviour in a motor vehicle (1) having a hybrid drive (2) or an electric drive, wherein a basic value (13) of the recuperation moment to be used for recuperation can be adjusted by means of a first control element, **characterised in that**
a second control element (8) for adjusting an intermediate value (14a, 14b, 14c, 14d, 14e) that deviates from the basic value (13) is used for the recuperation moment, wherein after the adjustment of an intermediate value (14a, 14b, 14c, 14d, 14e) by an operator, the intermediate value is at least temporarily used as the recuperation moment, in particular at least for the next thrust phase, after which, once a return condition is met, a switching back to the basic value (13) is carried out.

2. The method as claimed in claim 1,
**characterised in that**
as a return condition, the end of a thrust phase and/or the non-entry into a further thrust phase within a predetermined latency period after the end of a thrust phase is used.

3. The method as claimed in claim 1 or 2,
**characterised in that**
an adjustment of an intermediate value (14a, 14b, 14c, 14d, 14e) is made possible only if an adjustment condition is met and/or the adjustment to the intermediate value (14a, 14b, 14c, 14d, 14e) is maintained only for a predetermined adjustment period or for at least the duration of the next thrust phase started within the adjustment period or the already ongoing thrust phase.

4. The method as claimed in claim 3,
**characterised in that**
as the adjustment condition, the current presence of a thrust phase and/or the imminence of a thrust phase is used in a predetermined advance determination period.

5. The method as claimed in claim 4,
**characterised in that**
the imminence of a thrust phase is carried out as a function of predictive route data and/or data regarding a motor vehicle driving ahead and/or data regarding a speed limit.

6. The method as claimed in any one of claims 3 to 5, **characterised in that**,
if the adjustment condition is not present, the actuation of the control element (8) is blocked, in particular the control element (8) is locked.

7. The method as claimed in any one of the preceding claims,
**characterised in that**
a second control element (8) provided in a position that can be ergonomically reached by the driver whilst driving is used, in particular a control element (8) and/or a foot pedal that is provided in the area of the steering wheel (10) and/or of a shift lever.

8. The method as claimed in any one of the preceding claims,
**characterised in that**
as the second control element (8), a switch and/or a shift lever on the steering wheel (10) and/or on the steering column is used, in particular a paddle.

9. The method as claimed in any one of the preceding claims,
**characterised in that**
in the case of a stepwise adjustability of the recuperation moment, only an intermediate value (14a, 14b, 14c, 14d, 14e) that deviates from the basic value (13) by one step can be adjusted.

10. The method as claimed in any one of the preceding claims,
**characterised in that**
the adjustment of the basic value (13) is carried out with the adjustment of an operating mode of the motor vehicle (1), in particular a sports mode and/or a comfort mode and/or a normal mode and/or an energy-saving mode, and/or the user freely selects the basic value (13), in particular via a menu displayed on a man-machine interface (7).

11. The method as claimed in any one of the preceding claims,
**characterised in that** the current adjustment of the basic value (13) and/or of the intermediate value (14a, 14b, 14c, 14d, 14e) is displayed to a driver.

12. A motor vehicle (1) having a hybrid drive (2) or an electric drive, comprising a drive control unit (6) as well as a first control element for adjusting a basic value (13) of a recuperation moment to be used for recuperation and a second control element (8) for adjusting an intermediate value (14a, 14b, 14c, 14d, 14e) for a recuperation moment, formed for carrying out a method as claimed in any one of the preceding claims.

## Revendications

1. Procédé de commande du comportement de récupération dans un véhicule automobile (1) avec un moteur hybride (2) ou un moteur électrique, une valeur fondamentale (13) d'un couple de récupération à utiliser pour la récupération étant réglable au moyen d'au moins un premier élément de commande,
**caractérisé en ce qu'**un deuxième élément de commande (8) est utilisé pour le réglage d'une valeur intermédiaire (14a, 14b, 14c, 14d, 14e) s'écartant de la valeur fondamentale (13) pour le couple de récupération, étant donné que, après réglage d'une valeur intermédiaire (14a, 14b, 14c, 14d, 14e) par un utilisateur, on utilise la valeur intermédiaire comme couple de récupération temporairement, notamment au moins pour la prochaine phase propulsée, puis on revient à la valeur fondamentale (13) lors de l'apparition d'une condition de remise à l'état initial.

2. Procédé selon la revendication 1, **caractérisé en ce que**, comme condition de remise à l'état initial, on utilise la fin d'une phase propulsée et/ou la non-apparition d'une autre phase propulsée dans un temps de latence prédéterminé après la fin d'une phase propulsée.

3. Procédé selon la revendication 1 ou 2, **caractérisé en ce qu'**un réglage d'une valeur intermédiaire (14a, 14b, 14c, 14d, 14e) n'est possible qu'en présence d'une condition de réglage et/ou **en ce que** le réglage sur la valeur intermédiaire (14a, 14b, 14c, 14d, 14e) n'est conservé que pour un temps de réglage prédéterminé ou au moins pour la durée de la prochaine phase propulsée commencée pendant le temps de réglage ou de la phase propulsée déjà en cours.

4. Procédé selon la revendication 3, **caractérisé en ce que** l'on utilise comme condition de réglage la présence actuelle d'une phase propulsée et/ou l'imminence d'une phase propulsée dans un temps de prédétermination prédéterminé.

5. Procédé selon la revendication 4, **caractérisé en ce que** l'imminence d'une phase propulsée est fonction de données de parcours prévues et/ou de données concernant un véhicule automobile qui précède et/ou de données d'une limitation de vitesse.

6. Procédé selon l'une des revendications 3 à 5, **caractérisé en ce que**, si la condition de réglage n'est pas vérifiée, on bloque l'actionnement de l'élément de commande (8), notamment on arrête l'élément de commande (8).

7. Procédé selon l'une des revendications précédentes, **caractérisé en ce que** l'on utilise un deuxième élément de commande (8) agencé dans une position pouvant être atteinte de façon ergonomique par le conducteur pendant le trajet, notamment un élément de commande (8) agencé dans la zone du volant (10) et/ou d'un levier de vitesse et/ou une pédale.

8. Procédé selon l'une des revendications précédentes, **caractérisé en ce que** l'on utilise comme deuxième élément de commande (8) un commutateur et/ou un levier de commutation sur le volant (10) et/ou sur la colonne de direction, notamment une manette.

9. Procédé selon l'une des revendications précédentes, **caractérisé en ce que**, dans le cas d'une possibilité de réglage graduel du couple de récupération, on ne peut régler qu'une valeur intermédiaire (14a, 14b, 14c, 14d, 14e) s'écartant d'un degré de la valeur fondamentale (13).

10. Procédé selon l'une des revendications précédentes, **caractérisé en ce que** le réglage de la valeur fondamentale (13) s'effectue avec le réglage d'un mode de fonctionnement du véhicule automobile (1), notamment d'un mode sportif et/ou d'un mode de confort et/ou d'un mode normal et/ou d'un mode économique, et/ou l'utilisateur sélectionne librement la valeur fondamentale (13), notamment par l'intermédiaire d'un menu présenté sur une interface homme-machine (7).

11. Procédé selon l'une des revendications précédentes, **caractérisé en ce que** le réglage actuel de la valeur fondamentale (13) et/ou de la valeur intermédiaire (14a, 14b, 14c, 14d, 14e) est indiqué à un conducteur.

12. Véhicule automobile (1) avec un moteur hybride (2) ou un moteur électrique, comprenant un dispositif de commande de moteur (6) ainsi qu'un premier élément de commande pour le réglage d'une valeur fondamentale (13) d'un couple de récupération à utiliser pour la récupération et un deuxième élément de commande (8) pour le réglage d'une valeur intermédiaire (14a, 14b, 14c, 14d, 14e) pour un couple de récupération, conçu pour la mise en oeuvre d'un procédé selon l'une des revendications précédentes.
